# EUROPEAN PATENT APPLICATION

(11) **EP 2 325 995 A2**
(43) Date of publication of application: **25.05.2011**
(21) Application number: 10189849.2
(22) Date of filing: 03.11.2010
(51) Int. Cl.: H02M 7/538

(54) **Self-oscillating half-bridge drive device and light-emitting device**

(30) Priority: 20.11.2009 CN 200910226337
(71) Applicant: Osram Gesellschaft mit Beschränkter Haftung, 81543 München (DE)
(72) Inventor: Chen, Wei, 511400 Guangdong (CN); Lin, Yinxuan, 511400 Guangdong (CN); Liu, Dan, 511400 Guangdong (CN); Zhu, Qingfeng, 511400 Guangdong (CN)

(57) **Abstract**

The present invention relates to a self-oscillating half-bridge drive device, which comprises a half-bridge inverter circuit (I) comprising a first primary switch (Q1) and a second primary switch (Q2); and a pull-down unit (U). The pull-down unit (U) prevents the other of the primary switches (Q1, Q2) from being turned on when one of the primary switches (Q1, Q2) is in an on state so as to avoid turning on of both primary switches. In addition, the present invention also relates to a light-emitting device having such a self-oscillating half-bridge drive device.

## Description

### Field of the Invention

The present invention generally relates to driving of a light-emitting device, in particular to a self-oscillating half-bridge drive device. In addition, the present invention also relates to a light-emitting device having such a drive device.

### Background of the Invention

In the commonly used half-bridge inverters, there is usually such a situation as that one of the two primary switches that form the half-bridge inverter is turned on in advance when the other of the primary switches is going to be turned off but is not off yet, thus there is a time in which both of the primary switches are on, which makes the half-bridge inverters unable to work normally and will even damage the half-bridge inverters. Moreover, the commonly used half-bridge inverters also have the defect of being liable to be affected by outside interferences, namely, when one primary switch is turned on, the other primary switch is also turned on at the influence of interference signals.

### Summary of the Invention

In order to overcome turning on of both primary switches of the half-bridge inverter, the present invention provides an improved self-oscillating half-bridge drive, which includes: a half-bridge inverter circuit including a first primary switch and a second primary switch, each including a control electrode, a work electrode and a reference electrode, wherein the control electrode of the first primary switch is coupled to the first reference potential, the reference electrode of the second primary switch is coupled to the second reference potential, and the reference electrode of the first primary switch is coupled to the control electrode of the second primary switch and the coupling point forms the midpoint of the bridge arm; a pull-down unit including a first reference potential terminal and a second reference potential terminal, a first control terminal and a second control terminal, as well as a work terminal, wherein the first control terminal of the pull-down unit is coupled to the work electrode of the first primary switch, the second control terminal thereof is coupled to the work electrode of the second primary switch, the first reference potential terminal thereof is coupled to the control electrode of the first primary switch, the second reference potential terminal thereof is coupled to the reference electrode of the second primary switch, and the work terminal thereof is coupled to the midpoint of the bridge arm; wherein the pull-down unit is configured, when one of the primary switches is in an on state, to pull down the potential of the work electrode of the other of the primary switches to a degree that prevents it from being turned on, thereby to overcome turning on of both primary switches. The self-oscillating half-bridge drive device can effectively reduce the danger caused by the turning on of both of its primary switches during switching. In addition, the self-oscillating half-bridge drive device can shield interference signals to prevent erroneous turning-on of the other of the primary switches due to interference signals when one of the primary switches is on.

Furthermore, the present invention also provides a light-emitting device having such a drive device, wherein the driving voltage output from the self-oscillating half-bridge drive device is used to drive the light-emitting unit included in the light-emitting device. The light-emitting unit is preferably a fluorescent lamp.

### Brief Description of the Drawings

A fuller understanding of the invention will be obtained by referring to the following descriptions in conjunction with the accompanying drawings. Throughout the drawings, the same or similar reference numerals indicate the same or similar components. The drawings together with the following detailed descriptions are included in the specification and form a part thereof, meanwhile, they are used to further illustrate the preferred embodiments of the present invention and to explain the principle and advantages of the present invention. In the drawings:

Fig. 1 shows the self-oscillating half-bridge drive device of the embodiment of the present invention;

Fig. 2 shows a way of implementing the half-bridge inverter in the self-oscillating half-bridge drive device according to the embodiment of the present invention;

Fig. 3 shows another way of implementing the half-bridge inverter in the self-oscillating half-bridge drive device according to the embodiment of the present invention;

Fig. 4 shows a way of implementing the pull-down unit in the self-oscillating half-bridge drive device according to the embodiment of the present invention;

Fig. 5 shows a light-emitting device having the self-oscillating half-bridge drive device according to the embodiment of the present invention.

### Detailed Description of the Embodiments

The exemplary embodiments of the present invention will be described in the texts below with reference to the drawings. For the sake of clarity and concision, the specification does not describe all the features of the practical embodiments. However, it should be understood that in the process of developing any of such embodiments, many decisions particular to the embodiments must be made, so that the specific goals of the developers can be achieved, and such decisions may vary with different embodiments. In the drawings, the same or similar reference signs indicate the same or similar components.

It shall also be noted herein that, in order not to obscure the present invention by unnecessary details, only the structures of the devices that are closely related to the solution of the present invention are shown in the drawings, while other details that are not so much related to the present invention are omitted.

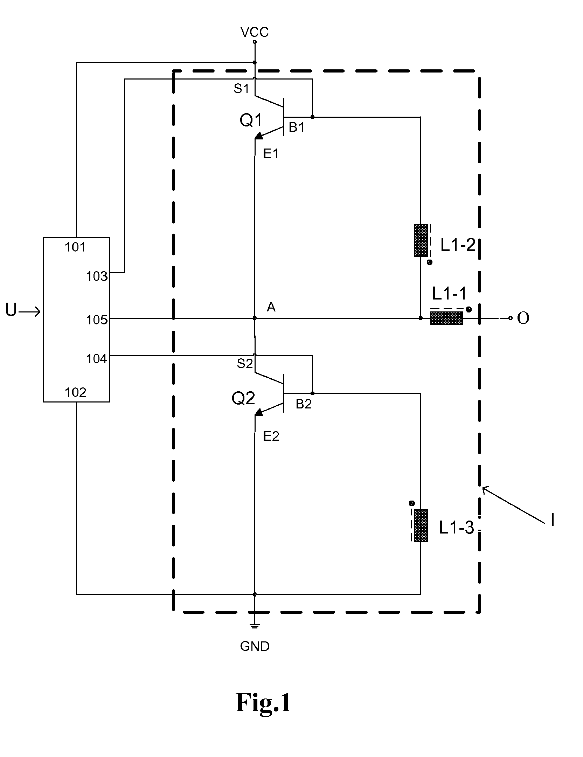

Fig. 1 shows the self-oscillating half-bridge drive device according to one embodiment of the present invention. The drive device includes a half-bridge inverter circuit I and a pull-down unit U. The half-bridge inverter circuit I has a circuit structure that generally known in the art. Specifically, the half-bridge inverter circuit I in this embodiment includes: a first primary switch Q1, a second primary switch Q2, and a transformer L1. The first primary switch Q1 and the second primary switch Q2 respectively include control electrodes S2 and S2, work electrodes B1 and B2, and reference electrodes E1 and E2. It shall be noted that the primary switches are described in Fig. 1 by taking only the NPN-type transistor as an example, and the work electrodes, control electrodes and reference electrodes in this embodiment respectively correspond to the base, collector and emitter of a transistor. The above-mentioned electrodes are named only for facilitating description, so the names should not be construed as defining the specific functions of the corresponding terminals of the device. The control electrode S1 of the first primary switch Q1 is coupled to the first reference potential V_{cc}, the reference electrode E2 of the second primary switch Q2 is coupled to the second reference potential GND. The reference electrode E1 of the first primary switch Q1 is coupled to the control electrode S2 of the second primary switch Q2 and the coupling point forms the midpoint A of the bridge arm. The transformer L1 includes a primary winding L1-1 and two secondary windings L1-2 and L1-3, in which the primary winding L1-1 is coupled to the midpoint A of the bridge arm, while the two secondary windings L1-2 and L1-3 are respectively coupled between the work electrodes B1 and B2 and the reference electrodes E1 and E2 of the first primary switch Q1 and the second primary switch Q2, with their dotted terminals being opposite to each other. In addition, the pull-down unit U includes: a first reference potential terminal 101, a second reference potential terminal 102, a first control terminal 103, a second control terminal 104, and a work terminal 105. The first control terminal 103 of the pull-down unit U is coupled to the work electrode B1 of the first primary switch Q1, the second control terminal 104 thereof is coupled to the work electrode B2 of the second primary switch Q2, the second reference potential terminal 102 thereof is coupled to the reference electrode E2 of the second primary switch Q2, and the work terminal 105 thereof is coupled to the midpoint A of the bridge arm of the half-bridge inverter circuit I. The pull-down unit U is configured, when one of the primary switches is in an on state, to pull down the potential of the work electrode of the other of the primary switches to a degree that prevents it from being turned on, thereby to overcome turning on of both primary switches. In this way, turning on of the two primary switches Q1 and Q2 during inversion is prevented; moreover, the influence to the operation of the primary switches Q1 and Q2 caused by the interference signals is prevented effectively. Although the present invention is depicted by using the NPN-type transistor as the primary switch, the present invention is not limited to the transistor depicted herein, as a matter of fact, the PNP-type transistor, field effect transistor, etc. can also be used to replace the primary switches of the present invention. Such alternative embodiments are not described one by one herein for the sake of concision, but on the basis of the information disclosed in this invention, those skilled in the art will obtain the alternative form of using the PNP-type transistor, the field effect transistor, etc. to realize the specific circuit structure of the technical solution of the present invention without any inventive labor.

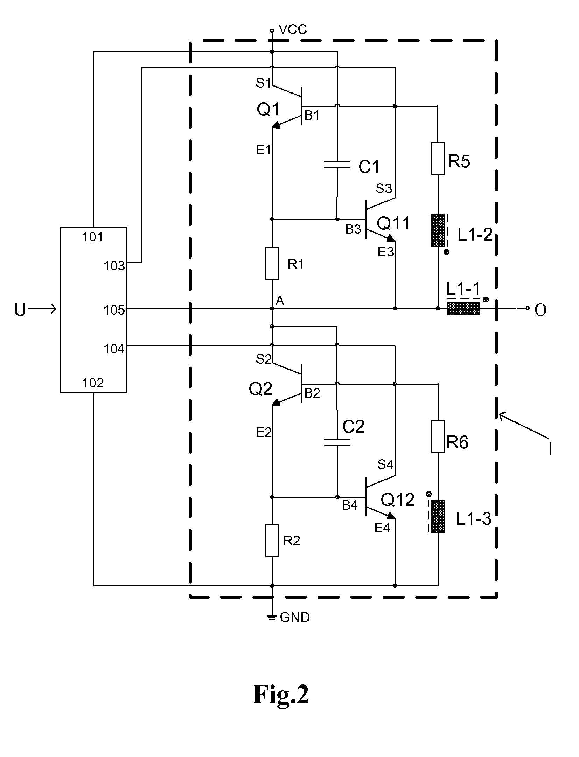

Fig. 2 shows a way of implementing the half-bridge inverter circuit in the self-oscillating half-bridge drive device according to the embodiment of the present invention. Comparing with the self-oscillating half-bridge drive device as shown in Fig. 1, the half-bridge inverter circuit I further includes a first auxiliary switch Q11, a second auxiliary switch Q12, a first charge accumulation element C1 and a second charge accumulation element C2. The first auxiliary switch Q11 and the second auxiliary switch Q12 respectively include control electrodes S1 and S2, work electrodes B1 and B2 and reference electrodes E1 and E2. It shall be noted that the auxiliary switches are described in Fig. 2 by taking only the NPN-type transistor as an example, and the work electrodes, control electrodes and reference electrodes of the auxiliary switches in this embodiment respectively correspond to the base, collector and emitter of a transistor. The above-mentioned electrodes are named only for facilitating description, so the names should not be construed as defining the specific functions of the corresponding terminals of the device. The control electrode S3 of the first auxiliary switch Q11 is coupled to the work electrode B1 of the first primary switch Q1, the work electrode B3 thereof is coupled to the reference electrode E1 of the first primary switch and is coupled via the first charge accumulation element C 1 to the control electrode S 1 of the first primary switch Q1, and the reference electrode E3 thereof is coupled to the midpoint A of the bridge arm. A resistor R1 is coupled between the work electrode B3 and the reference electrode E3 of the first auxiliary switch Q11 to provide a bias voltage to the first auxiliary switch Q11. The control electrode S4 of the second auxiliary switch Q12 is coupled to the work electrode B2 of the second primary switch Q2, the work electrode B4 thereof is coupled to the reference electrode E2 of the second primary switch Q2 and is coupled via the second charge accumulation element C2 to the control electrode S2 of the second primary switch Q2, and the reference electrode E4 thereof is coupled to the second reference potential. A resistor R2 is coupled between the work electrode B4 and the reference electrode E4 of the second auxiliary switch Q12 to provide a bias voltage to the second auxiliary switch Q12.

During operation of the self-oscillating half-bridge drive device as shown in Fig. 2, when the voltage of the control electrode S1 of the first primary switch Q 1 rises with respect to that of the reference electrode E1, the current charging a first capacitor C1 flows through the work electrode B3 of the first auxiliary switch Q11, as a result, the work electrode B1 of the first primary switch Q1 is connected to the midpoint A of the bridge arm, thereby accelerating turning off of the first primary switch Q1. The second auxiliary switch Q12 and the second charge accumulation element C2 operate in a similar way and produce the similar technical effects. The auxiliary switches Q11 and Q12 are not limited to the NPN-type transistor as shown herein, but they can be such devices as the PNP-type transistor, field effect transistor, etc. that have the similar switch function. With respect to these possible alternative solutions, those skilled in the art will realize them on the basis of the information disclosed in the invention in combination with the common technical knowledge in the art without any inventive labor.

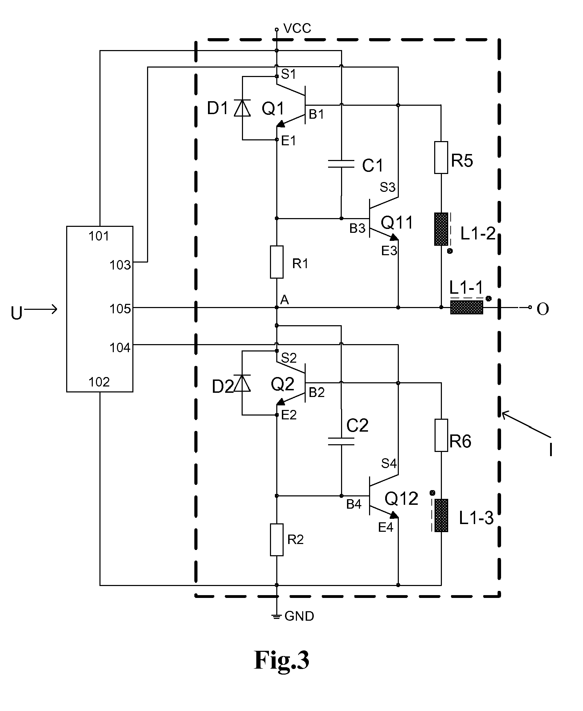

Fig. 3 shows another way of implementing the half-bridge inverter circuit in the self-oscillating half-bridge drive device according to the embodiment of the present invention. Compared to the way of implementing as shown in Fig. 2, it differs in that a first unidirectionally conductive element D1 and a second unidirectionally conductive element D2 are respectively connected in anti-parallel between the control electrodes S1 and S2 and the reference electrodes E1 and E2 of the first primary switch Q1 and the second primary switch Q2 of the half-bridge inverter circuit, which prevents the primary switches from an inverse operation and thereby making the half-bridge inverter circuit work more stably. The unidirectionally conductive elements D1 and D2 herein are exemplified by diodes. But those skilled in the art can apply other devices or means having a unidirectionally conductive function to the circuit disclosed in the present invention without any inventive labor. It shall be noted that the term "anti-parallel" used herein means that the unidirectionally conductive elements D1 and D2 are connected in parallel with the control electrodes and reference electrodes of the primary switches Q1 and Q2, and the conductive direction of the unidirectionally conductive elements D1 and D2 is opposite to the direction from the control electrodes to the reference electrodes of the primary switches Q1 and Q2.

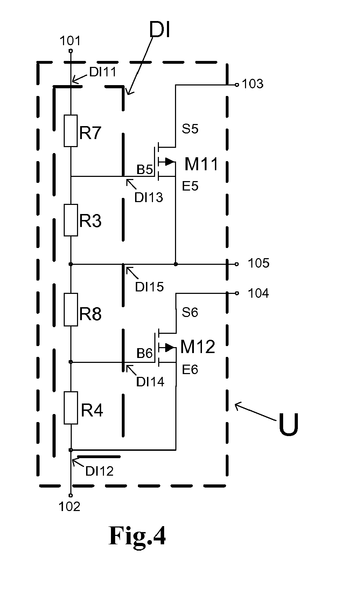

Fig. 4 shows a way of implementing the pull-down unit U in the self-oscillating half-bridge drive device according to the embodiment of the present invention. The pull-down unit U, as shown by the larger dashed block, includes: a bias voltage generating circuit DI, a first three-terminal controllable switch M11 and a second three-terminal controllable switch M12. The bias voltage generating circuit DI includes: a first input terminal DI11 and a second input terminal DI12 that form two reference potential terminals 101 and 102 as well as a first output terminal DI13 and a second output terminal DI14 that provide two bias voltages. The first three-terminal controllable switch M11 and the second three-terminal controllable switch M12 respectively include work electrodes B5 and B6, control electrodes S5 and S6, and reference electrodes E5 and E6. It shall be noted that the three-terminal controllable switches are described in Fig. 4 only by taking the field effect transistor as an example. Thus, the work electrodes, control electrodes and reference electrodes of the three-terminal controllable switches as mentioned in the specification respectively correspond to the gate, source and drain of the field effect transistor. The above-mentioned names are defined only for facilitating description, so the names should not be construed as defining the specific functions of the corresponding terminals of the device. The control electrodes S5 and S6 of the first three-terminal controllable switch M11 and the second three-terminal controllable switch M12 respectively form the first control terminal 103 and the second control terminal 104 of the pull-down unit U. The bias voltage generating circuit DI supplies the bias voltage necessary for the operation of the work electrodes B5 and B6 of the first three-terminal controllable switch M11 and the second three-terminal controllable switch M12 through the first output terminal DI13 and the second output terminal DI14.

Furthermore, as shown by the smaller dashed block in Fig. 4, the bias voltage generating circuit DI is formed of a plurality of resistors that are connected in series between the first reference potential V_{CC} and the second reference potential GND. A resistor R3 is coupled between the work electrode B5 and the reference electrode E5 of the first three-terminal controllable switch M11 to provide the bias voltage necessary for their operation. A resistor R4 is coupled between the work electrode B6 and the reference electrode E6 of the second three-terminal controllable switch M12 to provide the bias voltage necessary for their operation. The bias voltage generating circuit DI as shown herein further includes resistors R7 and R8, but the resistors can be omitted without affecting the bias voltage generating circuit DI in its function of supplying bias voltage to the three-terminal controllable switches M11 and M12. In addition, sliding rheostats may be used to replace the resistors herein. With respect to the three-terminal controllable switches, although it is described herein only by taking the field effect transistor as an example, transistors can also be used as the three-terminal controllable switches. The field effect transistor is preferably a small signal field effect transistor.

In the case where the pull-down unit U as shown in Fig. 4 is connected to the half-bridge inverter circuit I, when the second primary switch Q2 is going to be turned off but is not off yet, the first primary switch attempts to come to an on state. At this time, the first reference potential V_{CC} is higher than the potential of the midpoint A of the bridge arm of the half-bridge inverter I, so the control electrode S5 and reference electrode E5 of the first three-controllable switch M11 are put through while the potential of the work electrode B1 of the first primary switch Q1 is pulled down to be similar or equal to the potential of the midpoint A of the bridge arm, thus the first primary switch Q1 can not be turned on if the second primary switch Q2 is not completely turned off, which prevents turning on of both of the primary switches Q1 and Q2. Moreover, when the second primary switch Q2 is in an on state, the first reference potential V_{CC} is higher than the potential of the midpoint A of the bridge arm of the half-bridge inverter I at this time, so the control electrode S5 and reference electrode E5 of the first three-terminal controllable switch M11 are put through, so that the potential on the work electrode B1 of the first primary switch Q1 is pulled down to be similar or equal to the potential of the midpoint A of the bridge arm, thus during the process of turning on the second primary switch Q2, the first primary switch Q1 cannot be turned on even if it is influenced by interference signals, as a result, the influence to the first primary switch Q1 by the interference signals is shielded. Owing to the characteristics of symmetry of a circuit structure, the second three-terminal controllable switch M12 operates in a way similar to that of the first three-terminal controllable switch M11, so it is not described in detail any more.

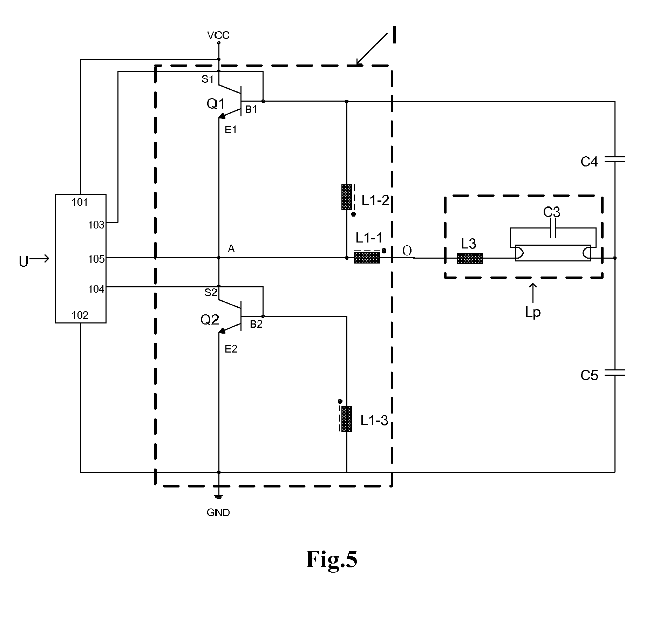

Fig. 5 shows a light-emitting device having the self-oscillating half-bridge drive device according to the embodiment of the present invention. The light-emitting device includes a light-emitting unit Lp exemplified by a fluorescent lamp and a self-oscillating half-bridge drive device. As shown in Fig. 5, the light-emitting unit Lp includes a filament, a capacitor C3 and an inductor L3. The self-oscillating half-bridge drive device outputs a driving voltage through an output O of the half-bridge inverter circuit I, so as to drive the fluorescent lamp Lp. Although the light-emitting device is illustrated by taking the basic structure of a fluorescent lamp as an example, those skilled in the art can apply the self-oscillating half-bridge drive device of the present invention to any type of light-emitting unit having similar function and operating principle without any inventive labor.

Finally, it shall be noted that the words "comprise" and "include" or the variants thereof do not mean to be exclusive, so any process, method, article or device that includes a series of elements includes not only the series of elements but also other elements that are not listed explicitly or the elements that are inherent in the process, method, article or device. Moreover, where there is no other limitations, the phrase "include (s) a..." preceding an element does not exclude the presence of other such elements in the process, method, article or device that include the element.

While the embodiments of the present invention have been described in detail in conjunction with the drawings, it shall be understood that they are merely intend to illustrate rather than limit the present invention. Various modifications and variations to the embodiments will be apparent to those skilled in the art without departing from the substance and scope of the present invention. Therefore, the scope of the present invention is defined by the appended claims and their equivalents.

## Claims

1. A self-oscillating half-bridge drive device, which comprises:
a half-bridge inverter circuit (I) comprising a first primary switch (Q1) and a second primary switch (Q2), which respectively comprise a control electrode (S1, S2), a work electrode (B1, B2) and a reference electrode (E1, E2), wherein the control electrode (S1) of the first primary switch (Q1) is coupled to the first reference potential (V_{CC}), the reference electrode (E2) of the second primary switch (Q2) is coupled to the second reference potential (GND), and the reference electrode (E1) of the first primary switch (Q1) is coupled to the control electrode (S2) of the second primary switch (Q2) and the coupling point forms the midpoint (A) of the bridge arm;
a pull-down unit (U) comprising a first reference potential terminal and a second reference potential terminal (101, 102), a first control terminal and a second control terminal (103, 104), as well as a work terminal (105), wherein the first control terminal (103) of the pull-down unit (U) is coupled to the work electrode (B1) of the first primary switch (Q1), the second control terminal (104) thereof is coupled to the work electrode (B2) of the second primary switch (Q2), the first reference potential terminal (101) thereof is coupled to the control electrode (S1) of the first primary switch (Q1), the second reference potential terminal (102) thereof is coupled to the reference electrode (E2) of the second primary switch (Q2), and the work terminal (105) thereof is coupled to the midpoint (A) of the bridge arm;
wherein the pull-down unit (U) is configured, when one of the primary switches (Q1, Q2) is in an on state, to pull down the potential of the work electrode (B1, B2) of the other of the primary switches (Q1, Q2) to a degree that prevents it from being turned on, thereby to overcome turning on of both primary switches (Q1, Q2).

2. The self-oscillating half-bridge drive device according to claim 1, wherein the pull-down unit (U) further comprises: a bias voltage generating circuit (DI) which comprises a first input terminal (DI11) and a second input terminal (DI12) that form the two reference potential terminals (101, 102) as well as a first output terminal (DI13) and a second output terminal (DI14) that provide two bias voltages; a first three-terminal controllable switch and a second three-terminal controllable switch (M11, M12), which respectively comprise a work electrode (B5, B6), a control electrode (S5, S6) and a reference electrode (E5, E6), the control electrodes (S5, S6) of the first three-terminal controllable switch and the second three-terminal controllable switch (M11, M12) respectively forming the first control terminal and second control terminal (103, 104) of the pull-down unit (U), wherein the bias voltage generating circuit (DI) supplies bias voltages to the control electrodes of the first three-terminal controllable switch and the second three-terminal controllable switch (M11, M12) through the first output terminal and second output terminal (DI13, DI14).

3. The self-oscillating half-bridge drive device according to claim 1 or 2, wherein the half-bridge inverter circuit (I) further comprises: a first auxiliary switch (Q11) and a second auxiliary switch (Q12) which respectively comprise a control electrode (S3, S4), a work electrode (B3, B4) and a reference electrode (E3, E4); and a first charge accumulation element (C1) and a second charge accumulation element (C2); wherein the control electrode (S3) of the first auxiliary switch (Q11) is coupled to the work electrode (B1) of the first primary switch (Q1), the work electrode (B3) thereof is coupled to the reference electrode (E1) of the first primary switch (Q1) and is coupled via the first charge accumulation element (C1) to the control electrode (S1) of the first primary switch (Q1), and the reference electrode (E3) thereof is coupled to the midpoint (A) of the bridge arm; the control electrode (S4) of the second auxiliary switch (Q12) is coupled to the work electrode (B2) of the second primary switch (Q2), the work electrode (B4) thereof is coupled to the reference electrode (E2) of the second primary switch (Q2) and is coupled via the second charge accumulation element (C2) to the control electrode (S2) of the second primary switch (Q2), and the reference electrode (E4) thereof is coupled to the second reference potential.

4. The self-oscillating half-bridge drive device according to any one of the preceding claims, wherein the half-bridge inverter circuit (I) further comprises a first unidirectionally conductive element (D1) and a second unidirectionally conductive element (D2), the first unidirectionally conductive element (D1) being connected in anti-parallel to the control electrode (S1) and the reference electrode (E1) of the first primary switch (Q1), and the second unidirectionally conductive element (D2) being connected in anti-parallel to the control electrode (S2) and the reference electrode (E2) of the second primary switch (Q2).

5. The self-oscillating half-bridge drive device according to any one of claims 2-4, wherein the bias voltage generating circuit (DI) is formed of a plurality of resistors or sliding rheostats that are coupled in series between the first reference potential (V_{CC}) and the second reference potential (GND), wherein the first resistor or sliding rheostats (R3) is coupled between the work electrode (B5) and the reference electrode (E5) of the first three-terminal controllable switch (M11) to provide the bias voltage necessary for operation of the first three-terminal controllable switch (M11), while the second resistor or sliding rheostats (R4) is coupled between the work electrode (B6) and the reference electrode (E6) of the second three-terminal controllable switch (M12) to provide the bias voltage necessary for operation of the second three-terminal controllable switch (M12).

6. The self-oscillating half-bridge drive device according to any one of claims 2-5, wherein the first primary switch and second primary switch (Q1, Q2), the first auxiliary switch and second auxiliary switch (Q11, Q12), and the first three-terminal controllable switch and second three-terminal controllable switch (M11, M12) are NPN-type transistors, PNP-type transistors or field effect transistors.

7. The self-oscillating half-bridge drive device according to claim 6, wherein the field effect transistors are small signal field effect transistors.

8. The self-oscillating half-bridge drive device according to any one of claims 3-7, wherein the first charge accumulation element (C1) and the second charge accumulation element (C2) are capacitors; and the first unidirectionally conductive element and second unidirectionally conductive element (D1, D2) are diodes.

9. A light-emitting device, which comprises the self-oscillating half-bridge drive device according to any one of claims 1-8 and a light-emitting unit (Lp), wherein the driving voltage output from the self-oscillating half-bridge drive device is used to drive the light-emitting unit (Lp).

10. The light-emitting device according to claim 9, **characterized in that** the light-emitting unit (Lp) is a fluorescent lamp.
